# EUROPÄISCHE PATENTSCHRIFT

(11) **EP 1 620 226 B1**
(45) Veröffentlichungstag und Bekanntmachung des Hinweises auf die Patenterteilung: **02.08.2006**
(21) Anmeldenummer: 04727517.7
(22) Anmeldetag: 15.04.2004
(51) Int. Cl.: B23Q 1/00

(54) **HOCHDRUCKKUPPLUNG FÜR DIE MEDIENDURCHFÜHRUNG AN SCHNELLWECHSELSYSTEMEN**
HIGH-PRESSURE COUPLING DEVICE FOR DIRECTING MEDIA THROUGH QUICK-CHANGE SYSTEMS
COUPLAGE HAUTE PRESSION DESTINE AU PASSAGE DE FLUIDES SUR DES SYSTEMES A CHANGEMENT RAPIDE

(30) Priorität: 15.04.2003 DE 10317340
(43) Veröffentlichungstag der Anmeldung: 01.02.2006
(73) Patentinhaber: SSA System-Spann AG, 8032 Zürich (CH)
(72) Erfinder: STARK, Emil, A-6840 Götzis (AT)
(74) Vertreter: Riebling, Peter
(86) Internationale Anmeldenummer: PCT/EP2004/003943
(87) Internationale Veröffentlichungsnummer: WO 2004/091848

(56) Entgegenhaltungen:
- EP-A- 1 050 363
- DE-A- 3 232 367
- US-A- 4 763 401

## Beschreibung

Die Erfindung betrifft eine Hochdruckkupplung für die Mediendurchführung an Schnettwechsetsystemen nach dem Oberbegriff des Patentanspruchs 1.

Eine derartige Hochdruckkupplung ist beispielsweise mit der auf den gleichen Erfinder zurückgehend EP 1 050 363 A2 bekannt geworden. Das Anwendungsgebiet der Erfindung bezieht sich auf sämtliche Hochdruckkupplungen für die Durchführung eines Hochdruckmediums, wie zum Beispiel Öl, Wasser, Gase, Fette und dergleichen mehr. Die erfindungsgemäße Hochdruckkupplung ist deshalb für sämtliche Schnellwechselsysteme verwendbar, insbesondere für Schnellwechselsysteme an Bearbeitungsmaschinen, jedoch auch für Schnellwechselsystem wie zum Beispiel die Kupplung einer Baggerschaufel an einem Baggerstiel und dergleichen mehr.

Die Erfindung ist also nicht darauf beschränkt, eine Hochdruckkupplung in Verbindung mit einem Schnellwechselsystem unter zu Hilfenahme einer Werkstückpalette und einem oder mehreren im Maschinentisch angeordneten Schnellspannzylindern zu beschreiben.

In der eingangs genannten EP 1 050 363 A2 war die Hochdruckkupplung unmittelbar im Deckel eines im Maschinentisch versenkt eingelassenen Schnellspannzylinders angeordnet. Damit bestand aber der Nachteil, dass ein nur stark beschränkter Einbauplatz für die Hochdruckkupplung gegeben war, weil diese in dem an sich kleinbauenden Deckel eines herkömmlichen Schnellspannzylinders integriert war. Damit konnten nur geringe Durchlassquerschnitte erreicht werden und die Durchflussmenge pro Zeiteinheit war daher stark begrenzt.

Ebenso war der Druckbereich auf nur etwa maximal 150 bar begrenzt, denn bei höheren Drücken und höheren Durchflussmengen kam es zu einer Zwangsschließung des Ventils, weil die vorhandene Feder den maximalen Druck begrenzte.

Es handelte sich um ein einseitig wirkendes Ventil, welches in der einen Richtung einen hohen Durchfluss erlaubte, in der Gegenrichtung jedoch nur einen geringen Durchfluss. Wurde der Durchfluss in der sperrenden Richtung überschritten, sperrte das Ventil.

Bei höheren Drücken stellte sich im übrigen heraus, dass sich das Ventilgehäuse in unerwünschter Weise über die Oberfläche des Deckels des Schnellspannzylinders herauswölbte, was zu einer Leckage führte und zu hohem Druck-Öl-Verlust.

Die Oberseite des Ventilkörpers wölbte sich also pilzförmig über die Oberfläche des Deckels des Schnellspannzylinders hinaus, wodurch eine ebene Auflage der auf den Schnellspannzylinder hochgenau aufzulegenden Werkstückpalette nicht mehr gegeben war. Das ganze System verzog sich dadurch.

Wegen der mehrfachen Abwinklung des Öldurchflusses bei dem bekannten System kam es zu Reibungsverlusten und zu einer unerwünschten Aufheizung des Ventils bei mit hoher Geschwindigkeit durchströmenden Medien.

Aufgrund der unerwünschten Aufheizung des Ventils bei hohen Strömungsgeschwindigkeiten verzog sich das gesamte Schnellspannsystem, was zu einer Ungenauigkeit bei der Bearbeitung der auf der Werkstückpalette eingespannten Werkstücken führte.

Bei der Verwendung schnellschaltender Magnetventile im Mediumdurchfluss bestand der weitere Nachteil, dass durch die Schaltschläge die auf das Medium übertragen wurden, der Ventilkörper im bekannten Ventil im Sinne einer Eigenschließung sich festsetzte und blockierte.

Bei einem derartigen Ölschlag konnte es im übrigen auch passieren, dass der Ventilkörper im Oberteil in unerwünschter Weise in Offenstellung gebracht wurde, wodurch die Dichtung zwischen dem Ober- und dem Unterteil aufgehoben wurde und ein seitlicher Druckölverlust stattfand.

Der Erfindung liegt deshalb die Aufgabe zugrunde eine Druckkupplung für die Mediendurchführung an Schnellwechselsystemen nach den Oberbegriff des Patentanspruchs 1 so weiterzubilden, dass sie für einen Hochdruck von bis zu 500 bar geeignet ist, ohne unerwünschte Verformungskräfte auf den Schnellspannzylinder einzuleiten, und eine sichere Funktion gewährleistet.

Zur Lösung der gesellten Aufgabe ist die Erfindung durch die technische Lehre des Anspruchs 1 gekennzeichnet.

Ein Gegenstand der Erfindung ist dabei, dass der tischseitige Teil der Kupplung einen im Maschinentisch fest verankerten Ventildorn in der Form einer Ventilschraube aufweist, welcher mit dem in der gegenüberliegenden Werkstückpalette angeordneten Kupplungsoberteil im Sinne einer Ventilbetätigung zusammenwirkt, und dass der maschinentischseitige Teil der Kupplung im Maschinentisch versenkt befestigt ist.

Um die weitere Beschreibung zu vereinfachen, wird in der folgenden Beschreibung davon ausgegangen, dass das im Maschinentisch angeordnete Teil der Hochdruckkupplung als Kupplungsunterteil bezeichnet wird, während der in der gegenüberliegenden Werkstückpalette angeordnete Teil der Hochdruckkupplung als Kupplungsoberteil bezeichnet wird. Diese Bezeichnungen sind willkürlich und können gegeneinander ausgetauscht werden.

Durch die Anordnung eines starren Dorns, der in den Maschinentisch verankert ist und der zu dem Kupplungsunterteil gehört, wird der Vorteil erreicht, dass die vom Öldruck beaufschlagte Fläche auf den Dorn nun nicht mehr in unerwünschter Weise im Sinne einer Verformung auf den Schnellspannzylinder übertragen wird, weil erfindungsgemäß die Hochdruckkupplung außerhalb des Bereiches des Deckels des Schnellspannzylinders angeordnet ist.

Dies ist ein wesentlicher Fortschritt gegenüber dem Stand der Technik, weil beim Stand der Technik die Hochdruckkupplung im Deckelbereich des Schnellspannzylinders angeordnet war und damit der Nachteil bestand, dass zunächst einmal der Einbauraum für die Hochdruckkupplung - wegen der begrenzten Deckelfläche - stark begrenzt war, wodurch beispielsweise nur eine Ölbohrung mit einem Durchlass von 4 mm erreichbar war.

Ein weiterer Nachteil bestand darin, dass wegen der Befestigung des einen Kupplungsteils am Deckel des Schnellspännzylinders hohe Verformungskräfte bei entsprechend hohen Öldrücken vom Kupplungssystem auf den Schnellspannzylinder im Sinne einer Verformungskraft übertragen wurden.

Der auf das Kupplungsunterteil im Sinne einer Abhebebewegung arbeitende Medium Hochdruck wirkte demzufolge auf die Verschraubungen des Deckels des Schnellspannzylinders ebenfalls im Sinne einer Abhebebewegung, wodurch diese Schrauben sehr stark auf Abscherung beansprucht wurden. Dies führte dazu, dass die Hochdruckkupplung nur mit einem Druck von maximal 150 bar beaufschlagt werden konnte, denn darüber hinausgehende Drücke - insbesondere auch Ölschläge - führten zum Abscheren deren Hochdruckkupplung oder Verbindungsschrauben zwischen dem Deckel des Schnellspannzylinders und dem Maschinentisch.

Wurde beim Stand der Technik die Werkstückpalette abgehoben, dass heißt das Kupplungsunterteil vom Kupplungsoberteil getrennt, dann wirkte der Hochdruck des Mediums auf die gesamte Kolbenfläche und zusätzlich noch auf die geschlossene Kupplungsunterseite der Hochdruckkupplung.

Beim Stand der Technik bestand im übrigen der Nachteil, dass zwei frei verschiebbare und mit entgegengesetzter Federkraft gegeneinanderwirkende Ventilkörper vorhanden waren, wobei der eine Ventilkörper im Kupplungsunterteil und der andere Ventilkörper im Kupp.lungsoberteil vorhanden waren. Bei entsprechender Hochdruckbeaufschlagung - insbesondere Hochdruck-Wechselbelastungen - konnten deshalb die Ventilkörper in unerwünschte Schwingungen versetzt werden und der Gestalt in Vibrationen geraten, dass sie gegeneinander im Bereich ihrer Berührungsflächen aneinander schlugen und sich zerstörten.

Wichtig ist, dass beide Ventilkörper gleichzeitig öffnen. Es wird also nicht eine Folgesteuerung wie beim Stand der Technik verwendet, bei dem zunächst der eine Ventilkörper und danach der andere Ventilkörper betätigt werden. Vielmehr wird eine vollkommen tropffreie Verbindung geschaffen, die beim Lösen und Kuppeln aufgrund der Planauflage der miteinander abdichtend in Berührung kommenden Schiebeventilhülsen von Ober- und Unterteil und Ventildorn synchron betätigt wird.

Mit der technischen Lehre nach der vorliegenden Erfindung wird der Vorteil erreicht, dass durch die maschinenfeste Anordnung eines Ventildorns im Maschinentisch nun auf einen federbelasteten Schließkörper verzichtet wird, wie er beim Stand der Technik vorhanden war. Auf diese Weise wird der auf den Ventilkörper wirkende Öldruck nun von diesem feststehenden Dorn aufgenommen und unmittelbar in den Maschinentisch eingeleitet. Wichtig hierbei ist, dass der Dorn mit einem Ventilkörper in der Weise zusammenarbeitet, dass der auf die Kupplungsunterseite wirkende Hochdruck im Sinne einer Schließbewegung auf den bewegbaren Ventilkörper arbeitet, so dass bei entsprechendem Hochdruck der Ventilkörper federbelastet automatisch schließt, was beim Stand der Technik nicht der Fall war.

Je mehr Druck im Kupplungsunterteil auf den feststehenden Dorn und auf den dort unter Federlast verschiebbaren Ventilkörper geleitet wird, desto größer wird die Schließkraft vom Ventilkörper an dem feststehenden Dorn.

Es handelt sich also um eine unter Hochdruck sich noch verbessert abdichtende Dichtung im Kupplungsunterteil.

Die versenkte Anordnung des Kupplungsünterteils im Maschinentisch - außerhalb des Bereiches des Deckels des Spannzylinders - hat den weiteren Vorteil, dass das gesamte Ventilunterteil gegen Verkippung und gegen unerwünschtem P,ufpilzen unter Hochdruckeinftuss geschützt ist, weil es formschlüssig in der Ausnehmung im Maschinentisch aufgenommen wird und daher ein Einfluss von Hochdruckmedium nicht zu einer Formänderung des Kupplungsunterteils führt.

Weiterer Vorteil der Erfindung ist, dass durch die versenkte Anordnung in einer zugeordneten Ausnehmung im Maschinentisch eine hohe Zentriergenauigkeit gegenüber dem in der gegenüberliegenden Werkstückpalette angeordneten Kuppiungsoberteil erreicht wird und im übrigen relativ geringe Baugrößen möglich sind, weil man relativ schwach dimensionierte Wandstärken für die beiden gegenüberliegenden Kupplungsteile verwenden kann, weil diese in zugeordneten - der Formänderung entgegenarbeitenden-Ausnehmungen gelagert sind.

Auf geringem Raum können daher relativ kleine Bauteile verwendet werden, weil diese formschlüssig in den zugeordneten Ausnehmungen einerseits im Maschinentisch und anderseits in der Werkstückpalette aufgenommen sind.

Weil man nun erfindungsgemäß die gesamte Hochdruckkupplung außerhalb des Deckels des Schnellspannzylinders anordnen kann besteht der weitere Vorteil, dass man nun die Durchflussquerschnitte wesentlich größer dimensioniert ausbilden kann, weil man nicht mehr auf den begrenzten Einbauraum des Deckels des Schnellspannzylinders angewiesen ist. Man kann dementsprechend auch große Anschraubbohrungen mit entsprechend großdimensionierten Befestigungsschrauben für die Befestigung der Hochdruckkupplung am Maschinentisch verwenden und ist nicht mehr an kleindimensionierte Schrauben angewiesen, die vorher in dem Bereich des Deckels des Schnellspannzylinders eingeschraubt werden mussten.

Beim Befestigen einer Hochdruckkupplung im Deckelbereich eines Schnellspannzylinders können im übrigen nur zwei am Umfang verteilt angeordnete Schrauben verwendet werden, welche die Hochdruckkupplung links und rechts befestigen.

Bei der Erfindung ist es hingegen möglich die Hochdruckkupplung mit mindestens drei Schrauben zu befestigen, die jeweils im Winkel von etwa 120° zueinander versetzt angeordnet sind, wodurch sich eine wesentlich bessere Befestigung der Hochdruckkupplung am Maschinentisch ergibt.

Selbstverständlich können bei der Erfindung auch mehr als drei Schrauben für die Befestigung der Hochdruckkupplung verwendet werden.

Weil erfindungsgemäß die Hockdruckkupplung nun außerhalb des Deckelbereiches des Schnellspannzylinders angeordnet ist, können für den Deckel des Schnellspannzylinders selbst wesentlich mehr Befestigungsschrauben verwendet werden, so dass dieser auch mit einem Hochdruck bis zu einer Grenze von 500 bar beaufschlagt ist, ohne das eine unerwünschte Verformung oder gar ein Abreisen des Deckels des Schnellspannzylinders befürchtet werden muss.

Bei der Erfindung ist im übrigen vorteilhaft, dass der in Schließrichtung federbelastete Ventilkörper im Kupplungsunterteil nur eine relativ schwache Feder benötigt, weil diese nur dazu notwendig ist, die Reibung des Ventilkörpers in der zugeordneten Ausnehmung im Ventilgehäuse zu überwinden, um diese in Schließstellung zu bringen.

Beim Stand der Technik musste hingegen eine großdimensionierte Feder verwendet werden, der eine ebenfalls relativ stark dimensionierte Feder im Kupplungsoberteil gegenüberlag, und beide Federn genau auf den Öldurchfluss abgestimmt werden mussten. Daher handelte es sich beim Stand der Technik um eine sogenannte Gegenstrom-Kupplung, bei der in einer Richtung einer hoher Fliessdurchfluss und in der anderen Richtung ein niedriger Fliessdurchfluss in Kauf genommen werden musste. Bei der Erfindung handelt es sich hingegen um eine Wechselstrom-Hochdruckkupplung, bei der in beiden Fließrichtungen der gleiche Öldurchfluss gegeben ist.

Die Erfindung verzichtet also auf eine Hochdruckkupplung, die in der Art eines Rückschlagventils arbeitet, so wie es aus dem Stand der Technik bekannt ist.

Ein weiterer Vorteil der Erfindung liegt darin, dass eine Zwangssteuerung der Ventilbewegungen zwischen dem Kupplungsoberteil und dem Kupplungsunterteil gegeben ist, weil in bestimmten Ausführungsformen der im Oberteil angeordnete, federbelastete Ventilkörper vollkommen entfallen kann. Bei Entfall dieses federbelasteten Ventilkörpers ist dann nur noch ein starrer, ungefederter Fortsatz vorhanden, der den entsprechenden, schwachfederbelasteten Ventilkörper im Kupplungsunterteil betätigt.

Es handelt sich also um eine Zwangssteuerung, die dafür sorgt, dass nicht zwei gegeneinander arbeitende Federn in unerwünschte Schwingungen geraten, sondern der durch das Ventil hindurchfließende Ölstrom hält die beweglichen Teile auf Anschlag, ohne diese gegen eine Federlast zu bewegen.

In einer anderen Ausgestaltung der Erfindung ist es vorgesehen, dass die Hochdruckkupplung wahlweise als zwangsgesteuerte und wahlweise als nichtzwangsgesteuerte Ausführung verwendbar ist. In dieser besonderen Ausführungsform kann der vorher erwähnte federbelastete Ventilkörper im Kupplungsoberteil wahlweise blockiert oder freigegeben werden, wodurch die Kupplung entweder zwangsgesteuert oder nicht-zwangsgesteuert betrieben werden kann.

Dabei wird bei nicht zwangsgesteuerter Kupplung der Ventilkörper im Oberteil federbelastet gegen eine zugeordnete Dichtfläche am Ventilkörper des Unterteils gedrückt.

Trotzdem ist eine unerwünschte Leckage im Zwischenraum zwischen den aufeinanderdichtend angesetzten Kupplungsober- und Unterteil nicht zu befürchten, weil das Kupplungsoberteil noch mit zusätzlichen Dichtfläche und einem Dichtring auf dem Ventilgehäuse des Kupplungsunterteils aufsitzt.

Weiterer Vorteil der Erfindung ist, dass eine starre Anschlagkante am federbelasteten Ventilkörper im Kupplungsoberteil die Ventilbewegung in Öffnungsrichtung begrenzt und bei Wechsellast des Ölstromes ein unkontrolliertes Schlagen dieses Ventilkörpers verhindert. Auf diese Weise wird gleichzeitig verhindert, dass die aufeinander dichtend, aufliegenden Ventilkörper von Ober- und Unterteil im Berührungsbereich nicht aneinander schlagen und sich gegenseitig zerstören. Es wird also auf eine schwimmende Berührung der beiden federbelasteten Ventilkörper erfindungsgemäß verzichtet, was mit hoher Beschädigungsgefahr bei Ölwechselschlägen verbunden war.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Draufsicht auf die Einbausituation der Hochdruckkupplung auf einem Maschinentisch;
- Figur 2:: ein Teilschnitt durch eine Mediendurchführung nach Figur 1;
- Figur 3:: eine gegenüber Figur 2 abgewandelte Ausführungsform im Schnitt;
- Figur 4:: eine Anordnung nach Figur 2 im Einbauzustand in gelöster (offener) Stellung;
- Figur 5:: die Anordnung nach Figur 4 in aufgesetzter Lage;
- Figur 6:: die Anordnung nach Figur 4 und 5 in vollständiger Verbindungsstellung;
- Figur 7:: die Unteransicht auf eine Werkstückpalette;
- Figur 8:: der Schnitt durch eine Werkstückpalette nach Figur 7;
- Figur 9:: ein vergrößerter Schnitt durch eine Hochdruckkupplung gemäß den Figuren 4 bis 6;
- Figur 10:: eine gegenüber Figur 9 abgewandelte Ausführungsform;
- Figur 11:: eine gegenüber Figur 9 und 10 weiter abgewandelte Ausführungsform.

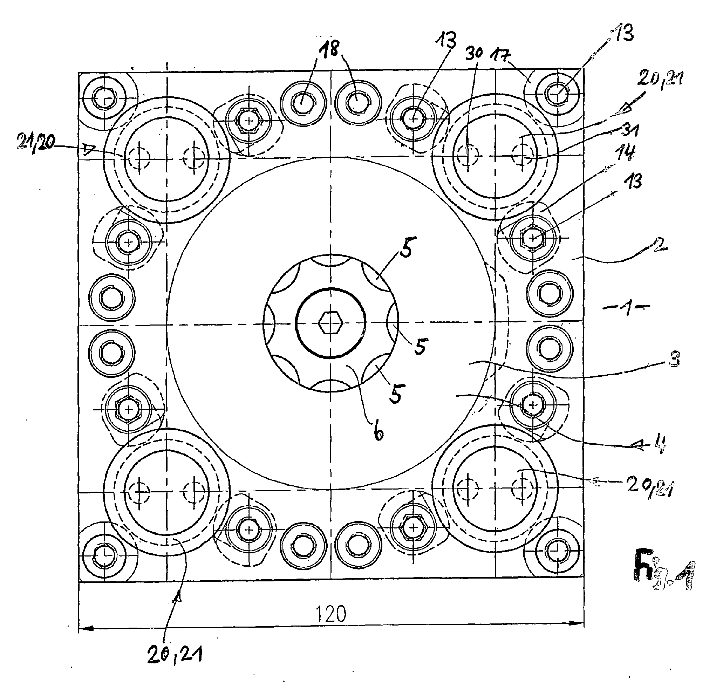

In Figur 1 ist allgemein dargestellt, dass auf einem Maschinentisch 1 ein Schnellspannzylinder 4 angeordnet ist, dessen Deckel 2 mit zugeordneten Schrauben 18 auf dem Maschinentisch 1 festgeschraubt ist.

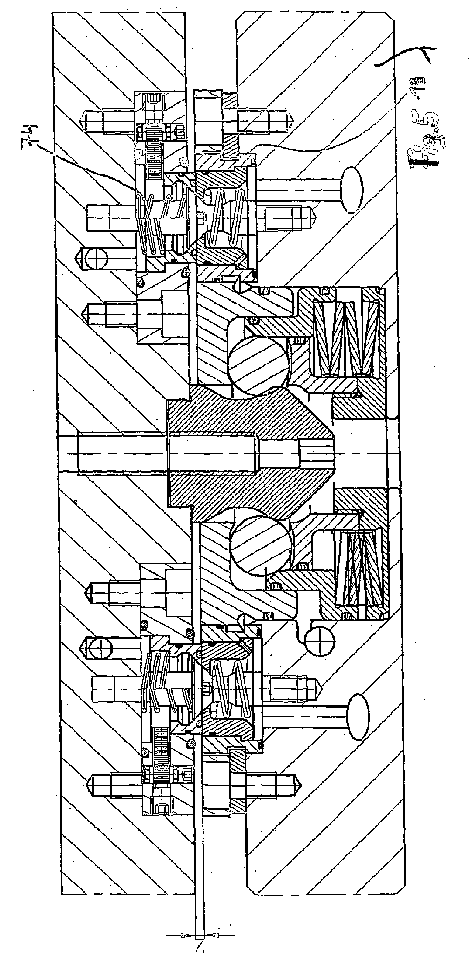

Der Schnellspannzylinder ist in den Figuren 4 bis 6 näher dargestellt. Er ist in einer Ausnehmung 3 im Maschinentisch 1 versenkt eingebaut oder er kann - nicht näher dargestellt - auch in einer Schnellverschlussplatte eingebaut sein. Der hier verwendete Begriff "Maschinentisch 1" ist weit zu fassen. Statt eines üblichen Maschinentisches können auch herkömmliche Platten oder auch doppelt übereinanderliegende Platten verwendet werden, die einen versenkten Einbau einer Hockdruckkupplung 20 erlauben.

In der Ausnehmung 3 im Maschinentisch 1 ist ein Einsteckmodul 12 eingebaut, welches aus einer unteren Federhalteplatte besteht, welche mit einer oberen Kugelauflage verschraubt ist. Zwischen diesen beiden hülsenförmigen Teilen ist die Feder 8 eingespannt, die bevorzugt als Teiterfeder ausgebildet ist.

Der Schnellspannzylinder 4 bildet eine zentrale Ausnehmung auf, in welche ein Einzugsnippel 7 eingreift, der dort mit gleichmäßig am Umfang angeordneten Kugel 5 verriegelbar ist. Die Verriegelung der Kugeln erfolgt hierbei durch die Federkraft der Feder 8, während die Entriegelung der Kugeln 5 - radial auswärts vom Einzugsnippel 7 weggestellt - durch einen mit Drucköl angetriebenen Kolben 9 erfolgt, der über einen Drucköleinlass 10 beaufschlagt wird.

Das Drucköl wird hierbei in einen Druckraum 11 eingeleitet und treibt den Kolben 9 im Sinne einer abwärtsgerichteten Bewegung an, so dass die Kugeln 5 außer ein Griff mit der umlaufenden Ringnut am Einzugsnippel 7 gelangen. Der Einzugsnippel 7 kann dann aus der zentralen Fangöffnung 6 des Schnellspannzylinders 4 herausgehoben werden, wie dies in Figur 4 dargestellt ist.

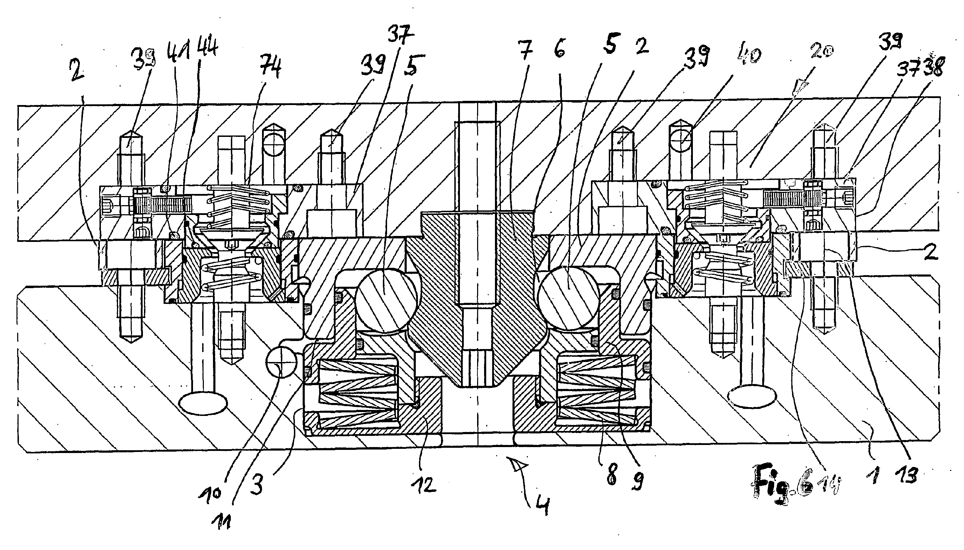

Die Figuren 4 bis 6 zeigen also verschiedene Schließstellungen des Schnellspannzylinders, wobei gemäß Figur 4 die mit dem Einzugsnippel 7 verbundene Werkstückpalette 15 von dem Maschinentisch 1 abgehoben ist, während sie in Figur 5 auf den Maschinentisch 1 aufgesetzt ist und in Figur 6 die Spannstellung erreicht wird, wo unter hoher Kraft die Werkstückpalette 15 hochgenau auf die Oberfläche des Maschinentisches 1 und dem dort gelagerten Schnellspannzylinder 4 herangezogen wird.

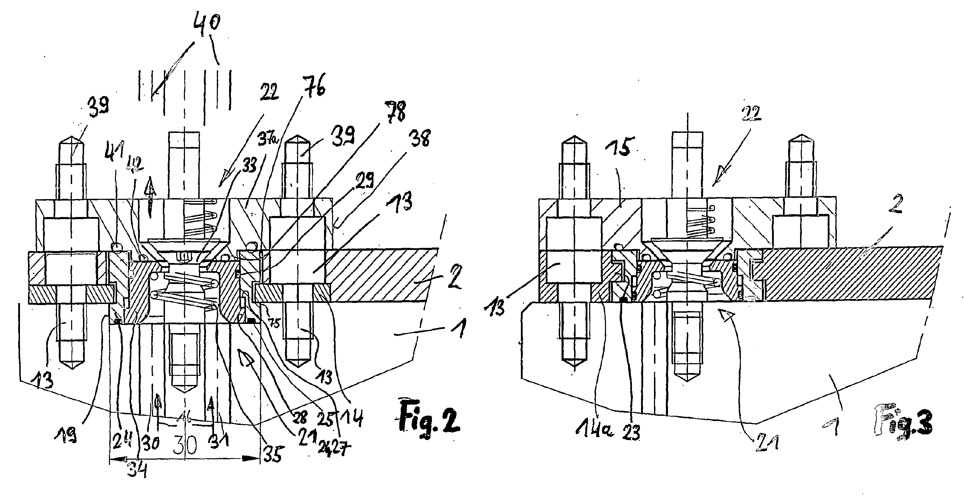

In an sich bekannter Weise sind auf der Werkstückpalette 15 nicht näher dargestellte Spannwerkzeuge angeordnet, mit denen zu bearbeitende Werkstücke eingespannt werden. Es können sich hierbei um Hydraulikspanner und dergleichen handeln. Wichtig ist nun das gemäß Figur 4 und Figur 2 in dem Maschinentisch 1 ein oder mehrere Ölbohrungen 30, 31 angeordnet sind, über welche das Drucköl mit Hochdruck durch die Hochdruckkupplung 20 hindurchgeleitet wird, wobei das Öl zunächst durch das Kupplungsunterteil 21 fließt, dort durch die geöffneten Ventilkörper in das Kupplungsoberteil 22 eintritt und in der Werkstückpalette 15 angeordnete weitere angeordnete Ölbohrungen 40 sich verteilt.

Dieses Drucköl wird dann den auf der Werkstückpafette 15 angeordneten ölhydraulischen Spannern und dergleichen zugeführt.

Wichtig bei der Erfindung ist nun, dass erfindungsgemäß die gesamte Hochdruckkupplung 20 außerhalb des Bereiches Schnellspannzylinders 4, insbesondere außerhalb des Deckelbereiches des Deckels 2 angeordnet ist.

Zwar zeigt die Figur 1, dass sich der Deckel 2 noch über den Einbauort der Hochdruckkupplungen 20 erstreckt, jedoch findet keinerlei Lastübertragung oder eine Formänderungsarbeit von den Hochdruckkupplungen 20 auf den Deckel 2 des Schnellspannzylinders 4 statt.

Die Erfindung sieht also ausdrücklich vor dass die Hochdruckkupplungen 20 gemäß Figur 1 auch außerhalb des Deckels 2 direkt auf dem Maschinentisch befestigt sind. Aus Platzgründen zeigt die vorliegende Erfindung jedoch, dass die Hochdruckkupplungen außerhalb der zentralen Ausnehmung 3 für den Schnellspannzylinder 4 angeordnet sind und insbesondere keinerlei lastübertragende Verbindung zu den Deckel 2 des Schnellspannzylinders 4 aufweisen.

Dies ist auch daran erkennbar, dass die acht Schrauben 18, welche den Deckel 2 mit dem Maschinentisch 1 festschrauben außerhalb des Befestigungsbereiches der in Figur 1 in Draufsicht dargestellten vier Hochdruckkupplungen 20 angeordnet sind. Jede der dort dargestellten Hochdruckkupplungen 20 ist nämlich mit drei gleichmäßig am Umfang verteilt angeordneten eigenen Spannschrauben 13 befestigt, wobei diese Spannschrauben 13 unmittelbar durch den Deckel 2 hindurch in den Maschinentisch 1 eingeschraubt sind und hierbei gemäß Figur 2 jede Schraube 13 mit einer Spannpratze 14 verbunden ist, die formschlüssig in der zugeordneten Rohrkörper 24 des Kupplungsunterteils 21 eingreift und damit das Kupplungsunterteil am Maschinentisch festlegt.

Damit wird die Anschlagkante 75 im Bereich der Befestigungsnut des Rohrkörpers 24 des Kupplungsunterteils 21 unmittelbar auf den Maschinentisch 1 festgelegt.

Während zwei Spannschrauben 13 mit exzentrisch drehbaren Spannpratzen 14 den Rohrkörper 24 ergreifen, weißt die dritte Spannschraube 13 eine kreisrunde Scheibe 17 auf, die ebenfalls in eine zugeordnete Nut am Umfang des Rohrkörpers 24 des Kupplungsunterteils 21 eingreift.

Jede Spannpratze 14 kann also mittels einer entsprechenden Sechskantschraube frei verdreht werden und damit von ihrer Eingriffsstellung mit der zugeordneten Nut im Rohrkörper 24 noch außer Eingriff mit dieser Nut im Rohrkörper 24 gebracht werden. Damit ist eine schnelllösbare Befestigung des Kupplungsunterteils 21 auf dem Maschinentisch 1 gezeigt. Wichtig ist nun, dass das gesamte Kupplungsunterteil 21 in einer versenkten und nach oben geöffneten Ausnehmung 19 im Maschinentisch 1 eingebaut ist, so dass der zum Kupplungsunterteil 21 gehörende Rohrkörper 24 formschlüssig in diese Ausnehmung 19 mit entsprechenden Anschlagkanten anliegt und gegen entsprechende Formänderung geschützt ist.

Aus der Schnittzeichnung in Figur 2 ist im übrigen erkennbar, dass zu den zugeordneten Umfangsflächen in der Ausnehmung im Deckel ein entsprechendes radiales Spiel besteht, so dass dort keine Lastübertragung zwischen dem Rohrkörper 24 des Kupplungsunterteils 21 auf den Deckel 2 erfolgt.

Auf diese Weise wird ein entsprechendes Wärmeausdehnungsspiel für den Rohrkörper 24 im Bereich der Größe ausgebildeten Ausnehmung im Deckel 2 gewährleistet.

In einer Weiterbildung der Erfindung kann es sogar vorgesehen sein, dass dieser Spalt 76 mit Blasluft gekühlt wird, um eine entsprechende unzulässige Wärmeausdehnung des Kupplungsunterteils zu vermeiden.

Der Spalt 76 zwischen dem Kupplungsunterteil 21 und der Ausnehmung im Deckel 2 des Schnellspannzylinders 4 verhindert also eine unerwünschte Wärmeübertragung auf diesen Deckel 2 und damit auch eine unerwünschte Formänderungsarbeit auf den Schnellspannzylinder, der andernfalls sich verziehen könnte und eine ungenaue Bearbeitung der auf der Werkstückpalette 15 aufgespannten Werkstücke veranlassen könnte.

Durch den versenkten, formschlüssigen Einbau des Rohrkörpers 24 des Kupplungsunterteils in der zugeordneten Ausnehmung 19 im Maschinentisch wird damit jede unerwünschte radiale Aufweitung des Kupplungsunterteils im Sinne einer umfassenden Manschette aufgefangen und verhindert. Damit können mit relativ geringen Materialquerschnitten für den Rohrkörper 24 ohne Durchströmkräfte und hohe Öldruckkräfte aufgenommen werden, weil die genannten Teile in der Ausnehmung 19 gegen radialer Aufweitung abgestützt sind.

Neben der Abstützung wird auch noch eine lagenrichtige Positionierung und Zentrierung des Kupplungsunterteils im Maschinentisch gewährleistet.

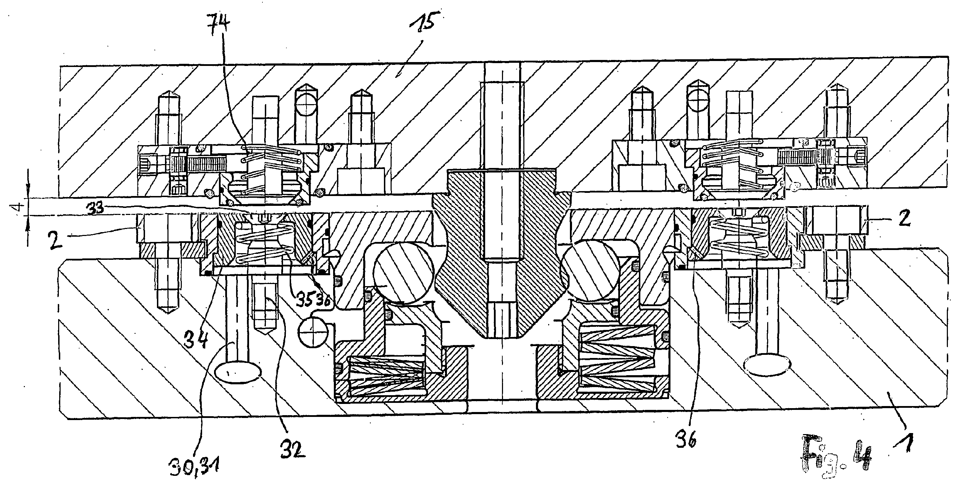

Die Figur 3 zeigt als vereinfachte Ausführungsform für die Ausführung einer Hochdruckkupplung, dass diese auch auf den Maschinentisch 1 direkt befestigt werden kann. Hierbei greifen die Spannschrauben 13 in zugeordnete Spannpratzen 14a ein, die mit radial einwärtsgerichteten Ansätzen 23 in eine zugeordnete umlaufende Nut im Bereich des'Rohrkörpers 24 eingreifen.

Eine derartige Ausführung kann jedoch nicht so hohe Formänderungsarbeiten aufnehmen wie vergleichsweise die Ausführung nach Figur 2. Sie soll nur illustrieren, dass auch eine Aufbaulösung nach Figur 3 im Vergleich zu der Einbaulösung nach Figur 2 für das Kupplungsunterteil 21 ebenfalls als erfindungswesentlich beansprucht wird.

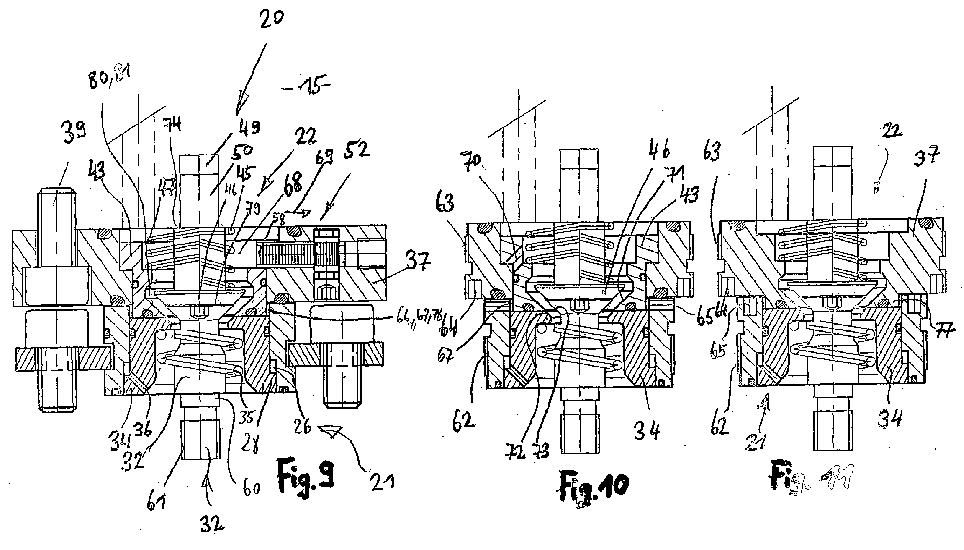

Nachfolgend wird nun die überlegene Abdichtung der einzelnen Kupplungsteile in Verbindung von Figur 2 und Figur 9 näher dargestellt.

Zunächst ist wesentlich, dass der Rohrkörper 24 stirnseitig mit einem unteren Dichtring 25 abdichtend auf dem Boden der Ausnehmung 19 im Maschinentisch aufsitzt. Im Rohrkörper 24 ist eine Schiebeventilhülse 34 unter Federlast verschiebbar angeordnet, wobei diese Schiebeventilhülse 34 eine bodenseitigen Ringansatz 28 vergrößerten Durchmessers aufweist, der in einer zugeordneten Ringausnehmung 26 verschiebbar ist. Die obere Fläche der Ringausnehmung wird durch eine Veranschlagkante 27 gebildet, an welcher der Ringansatz 28 in der Schließstellung anschlägt. Gleichzeitig legt sich ein Dichtkonus 72 am oberen Ende der Schiebeventilhülse 34 an einer zugeordneten Dichtschräge 73 im Bereich des Kopfes 33 einer Ventilschraube 32 an.

Hierdurch wird die in Schließstellung sich ergebende Dichtfläche gebildet.

Wichtig ist nun, dass diese Ventilschraube 32 mit einem zugeordneten Gewindebolzen 61 in eine zugeordnete Gewindebohrung im Maschinentisch eingeschraubt ist und daher ortsfest und unveränderlich ein Wiederlager für den die Hochdruckkupplung 20 durchsetzenden Ölstrom bildet.

Die vorher erwähnte Schiebeventilhülse 34 wird in Richtung auf ihre Schließstellung mit einer relativ schwach montierten Ventilfeder 35 vorgespannt, wobei diese Feder 35 lediglich die Reibung der Dichtung 29 an der Innenfläche des Rohrkörpers 24 überwinden muss, um die Schiebeventilhülse 34 in ihre Schließstellung zu bringen.

Die Figur 9 zeigt im übrigen, dass im Bereich des Ringansatzes 28 der Schiebeventilhülse 34 eine schräg verlaufende Entlüftungsbohrung 36 vorhanden ist, welche eine Entlastung des Drucköls von der Ringausnehmung 26 in den Bereich der zentralen Ausnehmung der Hochdruckkupplung 20 ermöglichst.

Die Schiebeventilhülse 34 ist über einen langen Dichtungsweg gedichtet, nämlich einmal im Bereich ihres radial auswartsgerichteten Ringansatzes 28 und zum zweiten in ihrem radial zurückversetzen zylindrischen Bereich, in dem die Dichtung 29 angeordnet ist.

In den Figuren 2 und 9 sind die beiden Kupplungsteile 21, 22 der Hochdruckkupplung 20 flüssigkeitsleitend miteinander verbunden. Die beiden einander gegenüberliegenden Ventilteile sind also in Offenstellung.

Das Kupplungsoberteil 22 besteht im wesentlichen aus einem Ventilflansch 37a (siehe Figur 2) der in einer zugeordneten Ausnehmung 38 an der Unterseite der Werkstückpalette 15 mittels Schrauben 39 festgelegt ist. Auf diese Weise wird eine ausgezeichnete Zentrierung des Kupplungsoberteils 22 in dieser Ausnehmung 38 erreicht und im übrigen die gleichen Vorteile wie sie anhand des Kupplungsunterteils 21 in der dortigen Ausnehmung 19 erläutert wurden.

Die Figur 2 zeigt eine erste Ausführungsform eines Kupplungsoberteils mit einem zwangsgesteuerten Ventil, weil der Ventilflansch 37a einstückig mit einem zugeordneten Ringansatz 78 verbunden ist, welcher zur Betätigung des unteren Ventilkörpers 34 des Ventilunterteils in die zentrale Ausnehmung zwischen dem Ober- und dem Unterteil 21, 22 einfahrbar ist. Damit wirkt dieser Ringansatz 78 im Sinne einer Öffnungsbewegung auf den federbelastet entgegenwirkenden Ventilkörper 34 im Unterteil 21.

Der Ventilflansch 37a weist hierzu auf der Berührungsfläche zum Ventilkörper 34 eine Dichtung 42 auf.

Radial auswärts und jenseits des Ringansatzes 78 ist eine weitere Dichtung 41 angeordnet, welche dafür sorgt, dass im Falle einer Leckage der Dichtung 42 Drucköl nicht zeitlich austritt.

Dieses wird von der Dichtung 41 zurückgehalten.

Weil die Dichtung 41 im axialen Abstand zu dem Ringansatz 78 zurück im Ventilflansch 37a versetzt ist, unterliegt die einer geringeren Beschädigungsgefahr als vergleichsweise die am vorderen Ringansatz 78 angeordnete Dichtung 42.

Im Kupplungsoberteil 22 ist ein unter Federlast verschiebbarer Ventilkörper 43 angeordnet. Dieser besteht im wesentlichen aus einem konusförmigen Ventilteller 46, der mit einem zugeordneten Stößel 50 verbunden ist, welcher Stößel in einer axialen Bohrung 49 in der Werkstückpalette 15 verschiebbar geführt ist.

An die Seite des Ventiltellers 46 legt sich das eine Ende einer schwächerdimensionierten Feder 45 an, die sich mit ihrem anderen Ende an der Bodenseite der Ausnehmung 38 abstützt.

Es ist eine größer dimensionierte Feder 47 vorhanden die sie mit ihrem einen Ende ebenfalls an der Bodenseite der Ausnehmung 38 abstützt und mit ihrem anderen Ende an den Ventilkörper 43.

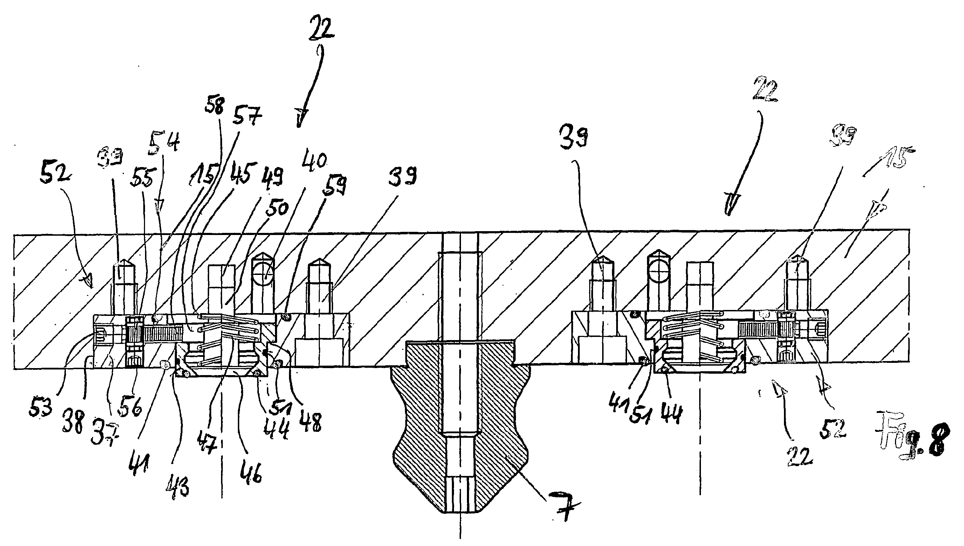

Diese wird somit federbelastet in axial nach unten verschobener Lage gehalten, wie dies in Figur 8 dargestellt ist.

Die kleinere Feder 45 spannt den konischen Ventilteller 46 in Schließstellung gegen den verschiebbaren Ventilkörper 43:

Die aus der Ausnehmung 38 herausragende Stirnseite des Ventilkörpers 43 trägt stirnseitig eine Dichtung 44 mit der diese auf dem zugeordneten Dichtkörper 34 am Kupplungsunterteil 21 dichtend aufliegt.

Der Ventilflansch ist im übrigen zur Bodenseite der Ausnehmung 38 mit einer Dichtung 59 abgedichtet und trägt an der gegenüberliegenden Seite eine Dichtung 41 die bereits schon anhand der Figur 6 beschrieben wurde.

Der verschiebbare Ventilkörper 43 trägt an seinem Außenumfang eine Dichtung 5, mit der er in den Ventilflansch 37 verschiebbar ist.

Der Ventilkörper 43 bildet einen axialen und radial nach außen gerichteten Ringflansch aus, der eine untere Anschlagkante 48 in Verbindung mit einer ortsfesten Anschlagkante im Bereich der zentralen Ausnehmung 68 zusammenwirkt.

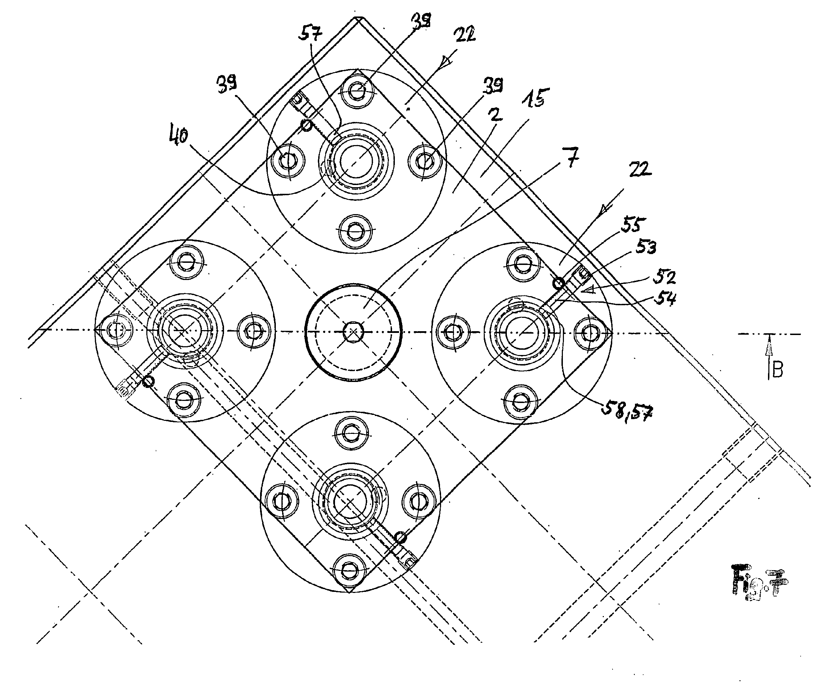

Die Figuren 4 bis 9 zeigen im übrigen auch noch eine Ventilblockierung 52 zur Blockierung des Verschiebungsweges des Ventilkörpers 43.

Ist der Ventilkörper 43 nicht blockiert und-voll beweglich, dann wirken die beiden Federn 45, 47 auf den Ventilkörper 43. im Sinne einer Schließbewegung.

In manchen Fällen ist die federbelastete Schließung des Ventilkörpers 43 unerwünscht. Es soll deshalb erfindungsgemäß eine Zwangsführung des Ventilkörpers 43 vorgesehen werden.

Diese Zwangsführung wird dadurch erreicht, dass mittels einer Ventilblockierung 52 der Verschiebungsweg des Ventilkörpers 43 blockiert wird und dieser ständig in seiner ausgefahrenen Stellung gehalten wird, wie dies beispielsweise in den Figuren 4 bis 9 dargestellt ist.

Zur Erreichung dieser Ventilblockierung ist im Ventilflansch 37 eine Querbohrung angeordnet, in der drehbar ein Ritzel 55 angeordnet ist, welches ein Betätigungsloch 56 zum Eingriff eines Sechskantschlüssels aufweist. Diese Ritzel 55 kämmt mit einer Zahnstange 54 die im Bereich einer Quernut 57 im Ventilflansch 37 verschiebbar ist. Die Quernut wird stirnseitig von einem Verschlussstopfen 53 verschlossen.

Bei der Drehbetätigung des Ritzels 55 wird somit die Zahnstange 54 in Pfeilrichtung 69 und in Gegenrichtung hierzu verschoben, wodurch das Ende 58 der Zahnstange entweder in Eingriff mit der Stirnseite des Ventilkörpers 43 gelangt oder außer Eingriff mit diesem.

In der Eingriffstellung des Endes 58 der Zahnstange 54 wird somit der Ventilkörper 43 in seiner vorderen Verschiebungsstellung blockiert und kann nicht mehr gegen die Kraft der Feder verschoben werden.

Das Ritzel 55 trägt im übrigen seinen zwei gegenüberliegenden Enden jeweils Dichtungen, um ein Austritt des Drucköls aus diesem Bereich zu verhindern.

Ist die Ventilblockierung 52 ausgerückt, dann kann also der Ventilkörper 42 zurückfedern und es besteht keine Beschädigungsgefahr, wenn die Werkstückpalette mit dem Kupplungsoberteil 22 auf eine glatte Fläche auf dem Maschinentisch 1 aufgesetzt wird, ohne ein Kupplungsunterteil 21 zu treffen.

Ist hingegen die Ventilblockierung 52 eingerückt, dann greift der Ringansatz 78 des Ventilkörpers 43 aus der Ausnehmung des Ventilflansches 37 heraus und steht über diese Fläche hervor. Bei hohen Lastwechselschlägen bedingt durch entsprechende Schläge im Drucköl kann somit nicht mehr der Ventilkörper 43 mit seiner Dichtung 44 an der gegenüberliegenden Fläche im Kupplungsunterteil 21 abheben. Es wird damit eine zwangsläufig geführte Verriegelung gewährleistet, welche ohne Federkraft arbeitet und daher nicht schwingen und zu Selbstzerstörungen führen kann.

Während die Figur 9 eine ein- und ausschattbare Ventilblockierung 52 zeigt, zeigen die Figuren 10 und 11 andere Ausführungen. Die Figur 10 zeigt, dass bei fehlen der Ventilblockierung lediglich eine Federbelastung des Ventilkörpers 43 vorhanden ist, wobei diese Ausführung nicht für hohe Lastwechsel im Druckmedium geeignet ist.

Allerdings zeigen die Figuren 10 und 11 auch, dass sowohl das Kupplungsunterteil 21 mit einem radial außenliegenden Gewindeansatz 62 in die zugeordnete Ausnehmung im Maschinentisch 1 einschraubbar ist, während andererseits das Kupplungsoberteil 22 mit ebenfalls einem radial auswärtsgerichteten Gewindeansatz 63 in eine zugeordnete Ausnehmung in der Werkstückpalette 15 eingeschraubt werden kann. Es handelt sich also um eine andere Befestigungsart als vergleichsweise vorstehend mit den Schrauben 39 und 13 erläutert wurde.

Die Figur 11 zeigt eine Ausführung bei der eine zwangsläufige Verrieglung eines Ventilkörpers vorhanden ist, weil der Ventilkörper 43 überhaupt entfallen ist. Der Ventilflansch ist werkstoffeinstückig mit einem axial vorstehenden Ringansatz 77 verbunden, der damit unmittelbar den unteren Ventilkörper 34 im Kupplungsunterteil betätigt.

Diese Ausführungsform ist für sehr hohe Lastwechsel und hohe Drücke geeignet, weil aufgrund der großflächigen Gewindeverschraubungen mit den Gewindeansätzen 62, 63 hohe Schubkräfte im Vergleich zu den vorher erwähnten Schrauben 39, 13 aufgenommen werden können.

Zur Festlegung wird das Kupplungsoberteil 22 gemäß Figur 11 mit durch Eingriff eines Steckschlüssels in die zugeordnete Steckschlüsselbohrung 64 in einer Gewindeausnehmung an der Innenseite der Werkstückpalette 15 festgelegt.

Eine ähnliche Steckschlüsselbohrung 65 zeigt das Kupplungsunterteil 21, so dass dieses ebenfalls mit dem Gewindeansatz 62 in der zugeordneten Ausnehmung im Maschinentisch 1 eingeschraubt wird.

Die Figur 10 zeigt im Vergleich zu der vorher erwähnten axial gerichteten Steckschlüsselbohrung 65 eine radial gerichtete Steckschlüsselbohrung 65, welche gestattet, dass in diesem Bereich noch eine zusätzliche Dichtung angeordnete werden kann.

Die Ventilbetätigung zwischen dem Kupplungsoberteil 22 und dem Kupplungsunterteil 21 erfolgt demgemäss nur durch einen Ringansatz 78, der entweder unmittelbar an dem Ventilflansch 37 angesetzt ist oder Teil eines Ventilkörpers 43 ist.

Dieser Ringansatz 78 greift also um die Eintauchtiefe 66 in das Kupplungsunterteil 21 ein und betätigt somit den unteren Ventilkörper 34 in Öffnungsstellung.

Wichtig ist im übrigen, dass der in dem Maschinentisch eingeschraubte Ventilschraube 32 noch einen Zentrieransatz 60 aufweist, mit dem die Ventilschraube im Maschinentisch noch zusätzlich zentriert wird.

Damit ist sichergestellt, dass die Gewindebohrung im Bezug auf den Gewindebolzen 61 genau fluchtend zu der Längsachse der Ventilschraube 32 ausgerichtet ist, weil diese noch zusätzlich in den Zentrieransatz 60 ausgerichtet wird.

Damit wird eine Konzentrizität der Längsachse der Ventilschraube 32 zu der zentralen Ausnehmung im Kupplungsunterteil erreicht.

Im Bereich der Eintauchtiefe 66 ergibt sich also ein genau konzentrischer Fügespalt 67 rings um den in das Unterteil eintauchenden Ringansatz 78, wie dies in Figur 9 dargestellt ist.

Dieser Fügespalt 67 sorgt dafür, dass keine Wärmeübertragung in diesem Bereich stattfinden kann.

Gemäß Figur 10 kann der im Kuppluhgsoberteil 22 angeordnete Ventilkörper 43 noch eine schräg verlaufende Entlüftungsbohrung 70 tragen, welche einen Druckölausgleich von der zentralen Ausnehmung in Richtung auf die Rückseite des Ventilkörpers gewährleistet, um ein Festsaugen dieses Ventilkörpers in der zentralen Ausnehmung bei der Verschiebung zu vermeiden.

Der Ventilteller 46 bildet im übrigen einen Dichtkonus aus, der sich abdichtend an dem gegenüberliegenden Dichtkonus 71 im Bereich des Ventilkörpers 43 anlegt (siehe Figur 10).

Figur 9 zeigt im übrigen, dass der Stößel 50 verringerten Durchmessers in einen zylindrischen Bolzen größeren Durchmessers übergeht, an dessen vorderen freien Ende schließlich der Ventilteller 46 angeordnet ist.

Im Übergangsbereich zwischen dem Stößel 50 und dem Bolzen größeren Durchmessers ist eine vertikale Anschlagkante 74 ausgebildet, so dass eine absolute Gratführung des gesamten Ve'ntilkörpers 46, 50 in der zugeordneten Bohrung 49 gegeben ist. Dies verhindert, dass sich der Ventilkörper verkantet oder schlägt, wenn hohe Druckwechselschläge in der zentralen Ausnehmung 68 stattfinden.

Der Ventilkörper ist also vollständig eingesperrt und lagensicher geführt.

Wenn nun beispielsweise das Drucköl mit hohem Druck in Pfeilrichtung 16 gemäß Figur 2 über die dort angegebenen Ölbohrungen 30, 31 gegen die Unterseite der feststehenden Ventilschraube 32 strömt, dann nimmt diese Ventilschraube über ihr bolzenseitiges Ende und über den. Eingriff des Gewindebolzens 61 im Maschinentisch die entsprechende Last auf. Diese Druckkraft wird dann nicht auf den darüber angeordneten Ventilteller 46 des im Kupplungsoberteil angeordneten Ventils übertragen, wodurch dieses von Drückübertragungen freigehalten wird.

Es kommt daher nicht zu dem unerwünschten Aufwölben und Aufpilzen der Hochdruckkupplung, weil die wesentliche Druckaufnahme durch eine feststehende und im Maschinentisch verankerte Ventilschraube 32 übernommen wird.

Es wird damit eine unzulässig hohe Aufspreizkraft oder Auseinanderreißkraft zwischen dem Kupplungsoberteil und dem Kupplungsunterteil vermieden, weil im wesentlichen der gesamte Öldruck von der konisch radial auswärts sich erweiternden Ventilschraube 32 aufgenommen wird und der Kopf der Ventilschraube abdichtend an dem gegenüberliegenden Ventilteil im Kupplungsoberteil anliegt, wodurch diese Fläche nicht mehr im Druckölstrom liegt.

Die im Druckölstrom liegende wirksame Fläche entsprechend dem maximalen Durchmesser des Kopfes der Ventilschraube 32 nimmt also die entsprechende Last auf, so dass diese Last nicht mehr im Sinne einer Auseinanderreißkraft auf die Hochdruckkupplung wirkt.

Daher muss der Schnellspannzylinder nicht mehr so hohe Schließkräfte aufnehmen wie vergleichsweise beim Stand der Technik, wo hohe Auseinanderreißl<räfte zwischen den beiden einander zugeordneten Kupplungsteilen wirkten.

Die dort angeordneten Kupplungsteile hatten unterschiedliche große Durchmesser im Hinblick auf ihre aneinander anliegende Auflagefläche, was zu einer Differenzkraft führte, die im Sinne einer Aüfreißbewegung wirkte.

Bei der Erfindung hingegen ist die Kontaktfläche an der Stirnseite der konischförmigen Ventilschraube eben und bündig mit der zugeordneten Kontaktfläche. Diese Verhältnisse sind in Figur 9 dargestellt, wo erkennbar ist, dass eine Kontaktfläche 79 ausgebildet ist, die sich zwischen der Unterseite des konischförmigen Ventiltellers 46 und der Stirnseite der Ventilschraube 32 ausbildet.

Die Kontaktfläche 79 ist von der hydraulisch wirksamen Fläche ausgeschlossen, weil nur noch die lichte Weite 80 im Dürchftussnngspatt 81 hydraulisch wirksam ist.

### Zeichnungslegende

- 1: Maschinenteil
- 2: Deckel
- 3: Ausnehmung
- 4: Schnellspannzylinder
- 5: Kugel
- 6: Fangöffnung
- 7: Einzugsnippel
- 8: Feder
- 9: Kolben
- 10: Drucköleinlass
- 11 1: Druckraum
- 12: Einsteckmodul
- 13: Spannschraube
- 14: Spannpratze 14a
- 15: Werkstückpalette
- 16: Pfeilrichtung
- 17: Scheibe
- 18: Schraube
- 19: Ausnehmung (Maschinentisch)
- 20: Hochdruckkupplung
- 21: Kupplungsunterteil
- 22: Kupplungsoberteil
- 23: Ansatz
- 24: Rohrkörper
- 25: Dichtring
- 26: Ringausnehmung
- 27: Anschlagkante
- 28: Ringansatz
- 29: Dichtung
- 30: Ölbohrung
- 31: Ölbohrung
- 32: Ventilschraube
- 33: Kopf
- 34: Schiebeventilhülse
- 35: Ventilfeder
- 36: Entlüftungsbohrung
- 37: Ventilflansch 37a
- 38: Ausnehmung
- 39: Schraube
- 40: Ölbohrung
- 41: Dichtung (Flansch 37)
- 42: Dichtung
- 43: Ventilkörper
- 44: Dichtung
- 45: Feder (klein)
- 46: Ventilteller
- 47: Feder (groß)
- 48: Anschlagkante
- 49: Bohrung
- 50: Stößel
- 51: Dichtung
- 52: Ventilblockierung
- 53: Verschlusstropfen
- 54: Zahnstange
- 55: Ritzel
- 56: Betätigungsloch
- 57: Quernut
- 58: Ende (Zahnstange 54)
- 59: Dichtung
- 60: Zentrieransatz
- 61: Gewindebolzen
- 62: Gewindeansatz
- 63: Gewindeansatz
- 64: Steckschlüsselbohrung
- 65: Steckschlüsselbohrung
- 66: Eintauchtiefe
- 67: Fügespalte
- 68: Ausnehmung
- 69: Pfeilrichtung
- 70: Entlüftungsbohrung
- 71: Dichtkonus
- 72: Dichtkonus
- 73: Dichtschräge
- 74: Anschlagkante
- 75: Anschlagkante
- 76: Spalt
- 77: Ringansatz
- 78: Ringansatz
- 79: Kontaktfläche
- 80: lichte Weite
- 81: Ringspalt

## Patentansprüche

1. Hochdruckkupplung für die Mediendurchführung an Schnellwechselsystemen, wie zum Beispiel Öl, Wasser, Gase, Fette und dergleichen mehr, wobei sich die Hochdruckkupplung (20) aus einem I<upplungsunterteil (21) und einem Kupplungsoberteil (22) zusammensetzt,
**dadurch gekennzeichnet, dass**
das Kupplungsunterteil (21) eine fest verankerte, starre Ventilschraube (32) aufweist, die zusammen mit einer federbelasteten Schiebeventilhülse (34) die Dichtwirkung für die Zuleitung des Hochdruckmediums bewirkt, und das Kupplungsoberteil (22) einen federbelasteten Ventilteller (46) aufweist, der zusammen mit einem Ventilkörper (43) die Dichtwirkung für die mit Hochdruckmedium zu versorgende Seite der Kupplung (20) bewirkt, so dass beim Zusammenführen des Kupplungsunterteils (21) mit dem Kupplungsoberteil (22) im Sinne einer Ventilbetätigung jeweils ein starres Ventilelement (32, 43) das federbelastete Ventilelement (46, 34) des Gegenstückes in der Hochdruckkupplung (20) gleichzeitig betätigt.

2. Hochdruckkupplung, nach Anspruch 1, **dadurch gekennzeichnet, dass** die Ventilanordnung zwischen Kupplungsunterteil (21) und Kupplungsoberteil (22) synchron und zwangsgesteuert ist.

3. Hochdruckkupplung, nach Anspruch 2, **dadurch gekennzeichnet, dass** die Zwangssteuerung der Ventilanordnung dafür sorgt, dass die federbelasteten Ventilteile (34, 46) so vom jeweiligen starren Gegenstück des Ventils (32, 43) betätigt werden, dass diese durch den hindurchfließenden Medienstrom nicht in Schwingung geraten.

4. Hochdruckkupplung, nach einem der Ansprüche 1 bis 3, **dadurch gekennzeichnet, dass** der Medienstrom die beweglichen Teile (34, 46) der Hochdruckkupplung (20) auf Anschlag hält, ohne diese gegen eine Federlast zu bewegen.

5. Hochdruckkupplung, nach einem der Ansprüche 1 bis 4, **dadurch gekennzeichnet, dass** die Ventilschraube (32) im Ventilunterteil (21) mit einem zugeordneten Gewindebolzen (61) in eine zugeordnete Gewindebohrung im Kupplungsunterteil (21) eingeschraubt ist, und daher ortsfest und unveränderlich ein Wiederlager für den die Hochdruckkupplung (20) durchsetzenden Medienstrom bildet.

6. Hochdruckkupplung, nach einem der Ansprüche 1 bis 5, **dadurch gekennzeichnet, dass** die Schiebeventilhülse (34) im Ventilunterteil (21) in Richtung auf ihre Schließstellung mit einer relativ schwach montierten Ventilfeder (35) vorgespannt ist, wobei diese Feder (35) lediglich die Reibung der Dichtung (29) an der Innenfläche des Rohrkörpers (24) überwinden muss, um die Schiebeventilhülse (34) in ihre Schließstellung zu bringen.

7. Hochdruckkupplung, nach einem der Ansprüche 1 bis 6, **dadurch gekennzeichnet, dass** im Bereich des Ringansatzes (28) der Schiebeventilhülse (34) eine schräg verlaufende Entlüftungsbohrung (36) vorhanden ist.

8. Hochdruckkupplung, nach einem der Ansprüche 1 bis 7, **dadurch gekennzeichnet, dass** die Schiebeventilhülse (34) über einen langen Dichtungsweg gedichtet ist, einmal im Bereich ihres radial auswärtsgerichteten Ringansatzes. (28), und zum anderen mal in ihrem radial zurückversetzen zylindrischen Bereich, in dem die Dichtung (29) angeordnet ist.

9. Hochdruckkupplung, nach einem der Ansprüche 1 bis 8, **dadurch gekennzeichnet, dass** das Kupplungsoberteil (22) im wesentlichen aus einem Ventilflansch (37a) besteht der in einer zugeordneten Ausnehmung (38) an der Unterseite einer Werkstückpalette (15) mittels Schrauben (39) festgelegt ist, so dass eine ausgezeichnete Zentrierung des Kupplungsoberteils (22) in dieser Ausnehmung (38) erreicht wird.

10. Hochdruckkupplung, nach einem der Ansprüche 1 bis 9, **dadurch gekennzeichnet, dass** der federbelastete Ventilkörper (43) im Kupplungsoberteil (22) wahlweise blockiert oder freigegeben werden kann, wodurch die Hochdruckkupplung (20) entweder zwangsgesteuert oder nicht-zwangsgesteuert betrieben werden kann.

11. Hochdruckkupplung, nach einem der Ansprüche 1 bis 10, **dadurch gekennzeichnet, dass** das Kupplungsunterteil (21) mit Spannschrauben (13) befestigt ist, wobei diese Spannschrauben (13) unmittelbar durch den Deckel (2) hindurch in einen Maschinentisch (1) eingeschraubt sind.

12. Hochdruckkupplung, nach Anspruch 11, **dadurch gekennzeichnet, dass** die Spannschraube (13) mit einer Spannpratze (14) verbunden ist, die formschlüssig in den zugeordneten Rohrkörper (24) des Kupplungsunterteils (21) eingreift und damit das Kupplungsunterteil am Maschinentisch (1) festlegt.

13. Hochdruckkupplung, nach einem der Ansprüche 11 und 12, **dadurch gekennzeichnet, dass** zwei Spannschrauben (13) mit exzentrisch drehbaren Spannpratzen (14) den Rohrkörper (24) ergreifen.

14. Hochdruckkupplung, nach einem der Ansprüche 11 bis 13, **dadurch gekennzeichnet, dass** eine weitere Spannschraube (13) eine kreisrunde Scheibe (17) aufweist, die ebenfalls in eine zugeordnete Nut am Umfang des Rohrkörpers (24) des Kupplungsunterteils (21) eingreift.

15. Hochdruckkupplung, nach einem der Ansprüche 13 und 14, **dadurch gekennzeichnet, dass** die Spannpratze (14) mittels einer entsprechenden Schraube frei verdreht werden kann, und damit von ihrer Eingriffsstellung mit der zugeordneten Nut im Rohrkörper (24) außer Eingriff mit dieser Nut gebracht werden kann und umgekehrt.

16. Hochdruckkupplung, nach einem der Ansprüche 1 bis 15, **dadurch gekennzeichnet, dass** das gesamte Kupplungsunterteil (21) in einer versenkten, und nach oben geöffneten Ausnehmung (19) im Maschinentisch (1) eingebaut ist, so dass der zum Kupplungsunterteil (21) gehörende Rohrkörper (24) formschlüssig in dieser Ausnehmung (19) mit entsprechenden Anschlagkanten anliegt, und gegen entsprechende Formänderung geschützt ist.

17. Hochdruckkupplung, nach Anspruch 16, **dadurch gekennzeichnet, dass** zu den zugeordneten Umfangsflächen in der Ausnehmung im Deckel (2) ein entsprechendes radiales Spiel besteht, so dass dort keine Lastübertragung zwischen dem Rohrkörper (24) des Kupplungsunterteils (21) auf den Deckel (2) erfolgt.

18. Hochdruckkupplung, nach einem der Ansprüche 16 und 17, **dadurch gekennzeichnet, dass** ein Wärmeausdehnungsspiel für den Rohrkörper (24) im Bereich der Größe der ausgebildeten Ausnehmung im Deckel (2) gewährleistet ist.

19. Hochdruckkupplung, nach einem der Ansprüche 17 und 18, **dadurch gekennzeichnet, dass** der Spalt (76) zwischen dem Kupplungsunterteil (21) und der Ausnehmung im Deckel (2) des Schnellspannzylinders (4) eine unerwünschte Wärmeübertragung auf diesen Deckel (2) verhindert und damit auch eine unerwünschte Formänderungsarbeit auf den Schnellspannzylinder (4), der sich andernfalls verziehen könnte und eine ungenaue Bearbeitung der auf der Werkstückpalette (15) aufgespannten Werkstücke veranlassen könnte.

20. Hochdruckkupplung, nach Anspruch 19, **dadurch gekennzeichnet, dass** der Spalt (76) mit Blasluft gekühlt wird, um eine Wärmeausdehnung des Kupplungsunterteils (21) zu vermeiden.

21. Hochdruckkupplung, nach einem der Ansprüche 9 bis 20, **dadurch gekennzeichnet, dass** die aus der Ausnehmung (38) herausragende Stirnseite des Ventilkörpers (43) im Kupplungsoberteil (22) stirnseitig eine Dichtung (44) trägt, mit der diese auf dem zugeordneten Dichtkörper (34) am Kupplungsunterteil (21) dichtend aufliegt.

22. Hochdruckkupplung, nach einem der Ansprüche 9 bis 21, **dadurch gekennzeichnet, dass** der Ventilkörper (43) in dem Ventilflansch (37) verschiebbar ist.

23. Hochdruckkupplung, nach einem der Ansprüche 1 bis 22, **dadurch gekennzeichnet, dass** mittels einer Ventilblockierung (52) der Verschiebungsweg des Ventilkörpers (43) blockiert werden kann, so dass dieser ständig in seiner ausgefahrenen Stellung gehalten wird.

24. Hochdruckkupplung, nach einem der Ansprüche 9 bis 23, **dadurch gekennzeichnet, dass** zur Erreichung einer Ventilblockierung im Ventilflansch (37) eine Querbohrung angeordnet ist, in der ein Ritzel (55) drehbar angeordnet ist, welches ein Betätigungsloch (56) zum Eingriff eines Sechskantschlüssels aufweist.

25. Hochdruckkupplung, nach Anspruche 24, **dadurch gekennzeichnet, dass** das Ritzel (55) mit einer Zahnstange (54) kämmt, die im Bereich einer Quernut (57) im Ventilflansch (37) verschiebbar ist.

26. Hochdruckkupplung, nach Anspruche 25, **dadurch gekennzeichnet, dass** bei der Drehbetätigung des Ritzels (55) die Zahnstange (54) axial, in Pfeilrichtung (69), oder in Gegenrichtung hierzu, verschoben wird, wodurch das Ende (58) der Zahnstange entweder in Eingriff mit der Stirnseite des Ventilkörpers (43) oder außer Eingriff mit diesem gelangt.

27. Hochdruckkupplung, nach einem der Ansprüche 25 und 26, **dadurch gekennzeichnet, dass** in der Eingriffstellung des Endes (58) der Zahnstange (54) der Ventilkörper (43) in seiner vorderen Verschiebungisstellung blockiert wird, und nicht mehr gegen die Kraft der Feder verschoben werden kann.

28. Hochdruckkupplung, nach einem der Ansprüche 25 bis 27, **dadurch gekennzeichnet, dass** das Ritzel (55) an seinen zwei gegenüberliegenden Enden jeweils Dichtungen aufweist, um ein Austritt des Druckmediums aus diesem Bereich zu verhindern.

29. Hochdruckkupplung, nach einem der Ansprüche 23 und 24, **dadurch gekennzeichnet, dass**, wenn die Ventilblockierung (52) ausgerückt ist, der Ventilkörper (42) zurückfedern kann, und keine Beschädigungsgefahr besteht, wenn die Werkstückpalette (15) mit dem Kupplungsoberteif (22) auf eine glatte Fläche auf dem Maschinentisch (1) aufgesetzt wird.

30. Hochdruckkupplung, nach einem der Ansprüche 23, 24 und 29, **dadurch gekennzeichnet, dass**, wenn die Ventilblockierung (52) eingerückt ist, der Ringansatz (78) des Ventilkörpers (43) aus der Ausnehmung des Ventilflansches (37) herausgreift, und über diese Fläche hervorsteht, so dass bei hohen Lastwechselschlägen, bedingt durch entsprechende Schläge im Mediumstrom., der Ventilkörper (43) nicht mehr mit seiner Dichtung (44) an der gegenüberliegenden Fläche im Kupplungsunterteil (21) abheben kann, wodurch eine zwangsläufig geführte Verriegelung gewährleistet ist, welche ohne Federkraft arbeitet und daher nicht schwingen und zu Setbstzerstörungen führen kann.

31. Hochdruckkupplung, nach einem der Ansprüche 1 bis 30, **dadurch gekennzeichnet, dass** im Kupplungsoberteil (22) im Übergangsbereich zwischen dem Stößel (50) und dem Bolzen größeren Durchmessers ist eine vertikale Anschlagkante (74) ausgebildet ist, so dass eine absolute Gratführung des gesamten Ventilkörpers (46, 50) in der zugeordneten Bohrung (49) gegeben ist, wodurch verhindert wird, dass sich der Ventilkörper verkantet oder schlägt, wenn hohe Druckwechseischläge in der zentralen Ausnehmung (68) stattfinden.

32. Hochdruckkupplung, nach einem der Ansprüche 1 bis 31, **dadurch gekennzeichnet, dass** die im Kupplungsunterteil (21) eingeschraubte Ventilschraube (32) einen Zentrieransatz (60) aufweist, mit dem die Ventilschraube im Maschinentisch (15) zentriert werden kann.

33. Hochdruckkupplung, nach einem der Ansprüche 1 bis 32, **dadurch gekennzeichnet, dass** die Hochdruckkupplung (20) im Maschinentisch (1) außerhalb der zentralen Ausnehmung (3) für den Schnellspannzylinder (4) angeordnet sind, und insbesondere keinerlei lastübertragende Verbindung zu den Deckel (2) des Schnellspannzylinders (4) aufweisen.

## Claims

1. High-pressure coupling for the passage of media at quick-change systems such as for example oil, water, gases, fats and the like more, the high-pressure coupling (20) being composed of a lower coupling portion (21) and an upper coupling portion (22),
**characterised in that**
the lower coupling portion (21) comprises a permanently anchored, rigid valve screw (32) which together with a spring-loaded sliding valve sleeve (34) causes the sealing action for supply of the high-pressure medium, and the upper coupling portion (22) comprises a spring-loaded valve disc (46) which together with a valve body (43) causes the sealing action for the side of the coupling (20) to be supplied with high-pressure medium, so that when the lower coupling portion (21) is brought together with the upper coupling portion (22) in the direction of valve actuation in each case a rigid valve element (32, 43) simultaneously actuates the spring-loaded valve element (46, 34) of the companion part in the high-pressure coupling (20).

2. High-pressure coupling, according to claim 1, **characterised in that** the valve arrangement between lower coupling portion (21) and upper coupling portion (22) is synchronous and positively controlled.

3. High-pressure coupling, according to claim 2, **characterised in that** positive control of the valve arrangement ensures that the spring-loaded valve portions (34, 46) are actuated by the respective rigid companion part of the valve (32, 43) in such a way that they do not go into oscillation due to the stream of medium flowing through.

4. High-pressure coupling, according to one of claims 1 to 3, **characterised in that** the stream of medium keeps the movable portions (34, 46) of the high-pressure coupling (20) in abutment without moving them against a spring load.

5. High-pressure coupling, according to one of claims 1 to 4, **characterised in that** the valve screw (32) in the lower valve portion (21) is screwed by an associated threaded bolt (61) into an associated threaded bore in the lower coupling portion (21), and therefore stationarily and invariably forms an abutment for the stream of medium passing through the high-pressure coupling (20).

6. High-pressure coupling, according to one of claims 1 to 5, **characterised in that** the sliding valve sleeve (34) in the lower valve portion (21) is biased in a direction towards its closed position with a relatively weakly mounted valve spring (35), this spring (35) having to overcome only the friction of the seal (29) on the inner surface of the pipe body (24) in order to bring the sliding valve sleeve (34) into its closed position.

7. High-pressure coupling, according to one of claims 1 to 6, **characterised in that** in the region of the ring attachment (28) of the sliding valve sleeve (34) there is an obliquely extending ventilation bore (36).

8. High-pressure coupling, according to one of claims 1 to 7, **characterised in that** the sliding valve sleeve (34) is sealed over a long sealing path, firstly in the region of its radially outwardly directed ring attachment (28), and secondly in its radially set-back cylindrical region in which the seal (29) is arranged.

9. High-pressure coupling, according to one of claims 1 to 8, **characterised in that** the upper coupling portion (22) essentially consists of a valve flange (37a) which is fixed in an associated recess (38) in the lower side of a work piece pallet (15) by means of screws (39), so that excellent centring of the upper coupling portion (22) in this recess (38) is achieved.

10. High-pressure coupling, according to one of claims 1 to 9, **characterised in that** the spring-loaded valve body (43) in the upper coupling portion (22) can be optionally locked or released, as a result of which the high-pressure coupling (20) can be operated either with or without positive control.

11. High-pressure coupling, according to one of claims 1 to 10, **characterised in that** the lower coupling portion (21) is fastened with clamping screws (13), these clamping screws (13) being screwed direct through the cover (2) into a machine bench (1).

12. High-pressure coupling, according to claim 11,
**characterised in that** the clamping screw (13) is connected to a clamping claw (14) which engages in form-locking relationship in the associated pipe body (24) of the lower coupling portion (21) and so fixes the lower coupling portion to the machine bench (1).

13. High-pressure coupling, according to one of claims 11 and 12, **characterised in that** two clamping screws (13) grip the pipe body (24) by eccentrically rotatable clamping claws (14).

14. High-pressure coupling, according to one of claims 11 to 13, **characterised in that** a further clamping screw (13) comprises a round washer (17) which also engages in an associated groove at the circumference of the pipe body (24) of the lower coupling portion (21).

15. High-pressure coupling, according to one of claims 13 and 14, **characterised in that** the clamping claw (14) can be freely rotated by means of a corresponding screw, and so from its position of engagement with the associated groove in the pipe body (24) can be disengaged from this groove, and vice versa.

16. High-pressure coupling, according to one of claims 1 to 15, **characterised in that** the whole lower coupling portion (21) is fitted in a countersunk and open-topped recess (19) in the machine bench (1), so that the pipe body (24) belonging to the lower coupling portion (21) abuts in form-locking relationship in this recess (19) with corresponding stop edges, and is protected from changing shape accordingly.

17. High-pressure coupling, according to claim 16, **characterised in that** for the associated circumferential surfaces in the recess in the cover (2) there is a corresponding radial clearance, so that no transfer of load between the pipe body (24) of the lower coupling portion (21) to the cover (2) is effected there.

18. High-pressure coupling, according to one of claims 16 and 17, **characterised in that** a thermal expansion clearance for the pipe body (24) in the region of the size of the recess formed in the cover (2) is ensured.

19. High-pressure coupling, according to one of claims 17 and 18, **characterised in that** the gap (76) between the lower coupling portion (21) and the recess in the cover (2) of the quick-release cylinder (4) prevents unwanted transfer of heat to this cover (2) and hence also unwanted deformation work to the quick-release cylinder (4) which could otherwise be distorted and could cause imprecise machining of the work pieces mounted on the work piece pallet (15).

20. High-pressure coupling, according to claim 19, **characterised in that** the gap (76) is cooled with blown air to avoid thermal expansion of the lower coupling portion (21).

21. High-pressure coupling, according to one of claims 9 to 20, **characterised in that** the end face of the valve body (43) in the upper coupling portion (22), which end face protrudes from the recess (38), carries on the end face a seal (44) with which it rests sealingly on the associated sealing body (34) on the lower coupling portion (21).

22. High-pressure coupling, according to one of claims 9 to 21, **characterised in that** the valve body (43) is slidable in the valve flange (37).

23. High-pressure coupling, according to one of claims 1 to 22, **characterised in that** the sliding path of the valve body (43) can be blocked by means of a valve blocking device (52), so that the valve body (43) is kept permanently in its extended position.

24. High-pressure coupling, according to one of claims 9 to 23, **characterised in that** to achieve valve blocking in the valve flange (37) is arranged a transverse bore in which is rotatably mounted a pinion (55) which has an actuating hole (56) for the engagement of a hexagon spanner.

25. High-pressure coupling, according to claim 24,
**characterised in that** the pinion (55) meshes with a rack (54) which is slidable in the region of a transverse groove (57) in the valve flange (37).

26. High-pressure coupling, according to claim 25, **characterised in that**, upon rotary actuation of the pinion (55), the rack (54) is slid axially, in arrow direction (69), or in the opposite direction thereto, as a result of which the end (58) of the rack becomes either engaged with or disengaged from the end face of the valve body (43).

27. High-pressure coupling, according to one of claims 25 and 26, **characterised in that** in the engaged position of the end (58) of the rack (54) the valve body (43) is blocked in its forward sliding position, and can no longer be slid against the force of the spring.

28. High-pressure coupling, according to one of claims 25 to 27, **characterised in that** the pinion (55) has seals at each of its two opposed ends to prevent escape of the pressure medium from this region.

29. High-pressure coupling, according to one of claims 23 and 24, **characterised in that**, when the valve blocking device (52) is disengaged, the valve body (42) can spring back, and there is no risk of damage if the work piece pallet (15) with the upper coupling portion (22) is placed on a smooth surface on the machine bench (1).

30. High-pressure coupling, according to one of claims 23, 24 and 29, **characterised in that**, when the valve blocking device (52) is engaged, the ring attachment (78) of the valve body (43) extends out of the recess in the valve flange (37) and protrudes beyond this surface, so that in case of load-change impacts, due to corresponding impacts in the stream of medium, the valve body (43) can no longer lift off with its seal (44) at the opposite surface in the lower coupling portion (21), ensuring positively guided locking which operates without spring force and so cannot vibrate and lead to self-destruction.

31. High-pressure coupling, according to one of claims 1 to 30, **characterised in that** in the upper coupling portion (22) in the transition region between the plunger (50) and the larger-diameter bolt is formed a vertical stop edge (74), so that the whole valve body (46, 50) is guided straight in the associated bore (49), preventing the valve body from tilting or running out of true when high pressure-change impacts take place in the central recess (68).

32. High-pressure coupling, according to one of claims 1 to 31, **characterised in that** the valve screw (32) which is screwed into the lower coupling portion (21) comprises a centring attachment (60) with which the valve screw can be centred in the machine bench (15).

33. High-pressure coupling, according to one of claims 1 to 32, **characterised in that** the high-pressure coupling (20) is arranged in the machine bench (1) outside the central recess (3) for the quick-release cylinder (4), and in particular has no load-transmitting connection to the cover (2) of the quick-release cylinder (4).

## Revendications

1. Raccord haute pression pour le passage de fluides sur des systèmes à changement rapide, comme par exemple de l'huile, de l'eau, des gaz, des graisses, etc., ce raccord haute pression (20) se composant d'un élément de raccord inférieur (21) et d'un élément de raccord supérieur (22),
**caractérisé en ce que** l'élément de raccord inférieur (21) comporte une vis de soupape rigide (32) ancrée solidement qui, avec une enveloppe de soupape à tiroir contrainte par ressort (34), provoque l'action d'étanchéité pour la conduite d'amenée du fluide haute, pression, et l'élément de raccord supérieur (22) comporte une tête de soupape contrainte par ressort (46) qui, avec un corps de soupape (43), provoque l'action d'étanchéité pour le côté du raccord (20) à alimenter en fluide haute pression, de telle sorte que lors du rapprochement de l'élément inférieur (21) et de l'élément supérieur (22) dans le sens d'un actionnement de soupape, des éléments de soupape rigides (32, 43) actionnent simultanément l'élément de soupape contraint par ressort (46, 34) de la partie opposée prévue dans le raccord haute pression (20).

2. Raccord haute pression selon la revendication 1, **caractérisé en ce que** le dispositif de soupape entre l'élément de raccord inférieur (21) et l'élément de raccord supérieur (22) est synchrone et soumis à une commande forcée.

3. Raccord haute pression selon la revendication 2, **caractérisé en ce que** la commande forcée du dispositif de soupape garantit que les éléments de soupape contraints par ressort (34, 46) soient actionnés par l'élément rigide opposé de la soupape (32, 43) de sorte que ceux-ci ne vibrent pas sous l'action du courant de fluide qui passe.

4. Raccord haute pression selon l'une des revendications 1 à 3, **caractérisé en ce que** le courant de fluide maintient les éléments mobiles (34, 46) du raccord haute pression (20) en butée l'un contre l'autre sans les déplacer à l'encontre d'une contrainte de ressort.

5. Raccord haute pression selon l'une des revendications 1 à 4, **caractérisé en ce que** la vis de soupape (32) prévue dans l'élément de soupape inférieur (21) est vissée avec une tige filetée associée (61) dans un trou fileté associé de l'élément de raccord inférieur (21), et forme par conséquent de manière stationnaire et invariable une butée pour le courant de fluide qui traverse le raccord haute pression (20).

6. Raccord haute pression selon l'une des revendications 1 à 5, **caractérisé en ce que** l'enveloppe de soupape à tiroir (34) prévue dans l'élément de soupape inférieur (21) est contrainte vers sa.position fermée grâce à un ressort de soupape (35) à montage relativement léger, ce ressort (35) devant seulement surmonter le frottement du joint d'étanchéité (29) sur la surface intérieure du corps tubulaire (24) pour amener l'enveloppe de soupape à tiroir (34) dans sa position fermée.

7. Raccord haute pression selon l'une des revendications 1 à 6, **caractérisé en ce qu'**il est prévu dans la zone de l'épaulement annulaire (28) de l'enveloppe de soupape à tiroir (34) un perçage d'évacuation d'air (36) disposé en biais.

8. Raccord haute pression selon l'une des revendications 1 à 7, **caractérisé en ce que** l'enveloppe de soupape à tiroir (34) est étanche sur une course d'étanchéité longue, d'une part dans la zone de son épaulement annulaire (28) dirigé radialement vers l'extérieur, et d'autre part dans sa zone cylindrique radialement en retrait dans laquelle est disposé le joint d'étanchéité (29).

9. Raccord haute pression selon l'une des revendications 1 à 8, **caractérisé en ce que** l'élément de raccord supérieur (22) se compose essentiellement d'une collerette de soupape (37a) qui est immobilisée dans un creux associé (38) du côté inférieur d'une palette de pièces (15) à l'aide de vis (39), de telle sorte qu'on obtient un excellent centrage de l'élément de raccord supérieur (22) dans ce creux (38).

10. Raccord haute pression selon l'une des revendications 1 à 9, **caractérisé en ce que** le corps de soupape contraint par ressort (43) prévu dans l'élément de raccord supérieur (22) peut être sélectivement bloqué ou dégagé, moyennant quoi le raccord haute pression (20) peut fonctionner avec une commandée forcée ou avec une commande non forcée.

11. Raccord haute pression selon l'une des revendications 1 à 10, **caractérisé en ce que** l'élément de raccord inférieur (21) est fixé à l'aide de vis de serrage (13), ces vis de serrage (13) étant vissées dans un banc de machiné (1) directement à travers le couvercle (2).

12. Raccord haute pression selon la revendication 11,
**caractérisé en ce que** la vis de serrage (13) est reliée à une griffe de serrage (14) qui pénètre par complémentarité de forme dans le corps tubulaire associé (24) de l'élément de raccord inférieur (21) et immobilise ainsi ce dernier sur le banc de machine (1).

13. Raccord haute pression selon la revendication 11
ou 12, **caractérisé en ce que** deux vis de serrage (13) tiennent le corps tubulaire (24) avec des griffes de serrage (14) aptes à tourner de manière excentrique.

14. Raccord haute pression selon l'une des revendications 11 à 13, **caractérisé en ce qu'**une autre vis de serrage (13) présente uneplaq:ue ronde (17) qui pénètre également dans une rainure associée prévue sur la circonférence du corps tubulaire (24) de l'élément de raccord inférieur (21).

15. Raccord haute pression selon la revendication 13
ou 14, **caractérisé en ce que** la griffe de serrage (14) peut être tournée librement à l'aide d'une vis correspondante et peut ainsi, à partir de sa position de contact avec la rainure associée du corps tubulaire (24), être désolidarisée de cette rainure et inversement.

16. Raccord haute pression selon l'une des revendications 1 à 15, **caractérisé en ce que** tout l'élément de raccord inférieur (21) est monté dans un creux (19) fraisé dans le banc de machine (1) et ouvert vers le haut, de telle sorte que le corps tubulaire (24) appartenant audit élément inférieur (21) est appliqué par complémentarité de forme dans ce creux (19), avec des bords de butée correspondants, et est protégé d'une variation de forme correspondante.

17. Raccord haute pression selon la revendication 16, **caractérisé en ce qu'**il y a un jeu radial approprié par rapport aux surfaces périphériques associées, dans le creux prévu dans le couvercle (2), de telle sorte qu'il n'y a pas à cet endroit de transfert de charge du corps tubulaire (24) de l'élément de raccord inférieur (21) vers le couvercle (2).

18. Raccord haute pression selon la revendication 16 ou 17, **caractérisé en ce qu'**un jeu de dilatation thermique de l'ordre de la taille du creux formé dans le couvercle (2) est garanti pour le corps tubulaire (24).

19. Raccord haute pression selon la revendication 17 ou 18, **caractérisé en ce que** l'interstice (76) entre l'élément de raccord inférieur (21) et le creux du couvercle (2) du cylindre à serrage rapide (4) empêche un transfert de chaleur indésirable vers ce couvercle (2) et aussi, de ce fait, un travail de déformation indésirable sur le cylindre (4) qui, sinon, pourrait se déformer et provoquer un usinage imprécis des pièces montées sur la palette de pièces (15).

20. Raccord haute pression selon la revendication 19, **caractérisé en ce que** l'interstice (76) est refroidi avec de l'air soufflé, afin d'éviter une dilatation thermique de l'élément de raccord inférieur (21).

21. Raccord haute pression selon l'une des revendications 9 à 20, **caractérisé en ce que** le côté frontal du corps de soupape (43), prévu dans l'élément de raccord supérieur (22), qui dépasse du creux (38) porte côté frontal un joint d'étanchéité (44) avec lequel il est posé de manière étanche sur le corps d'étanchéité associé (34) prévu sur l'élément de raccord inférieur (21).

22. Raccord haute pression selon l'une des revendications 9 à 21, **caractérisé en ce que** le corps de soupape (43) est apte à coulisser dans la-collerette de soupape (37).

23. Raccord haute pression selon l'une des revendications 1 à 22, **caractérisé en ce qu'**à l'aide d'un dispositif de blocage de soupape (52), la course de coulissement du corps de soupape (43) peut être bloquée, de telle sorte que celui-ci est maintenu en permanence dans sa position déployée.

24. Raccord haute pression selon l'une des revendications 9 à 23, **caractérisé en ce qu'**il est prévu dans la collerette de soupape (37), pour obtenir un blocage de soupape, un perçage transversal dans lequel est disposé en rotation un pignon (55) qui présente, un trou d'actionnement (56) pour l'accouplement d'wrie clé à six pans.

25. Raccord haute pression selon la revendication 24, **caractérisé en ce que** le pignon (55) s'engrène avec une crémaillère (54) qui est apte à coulisser dans la zone d'une rainure transversale (57) prévue dans la collerette de soupape (37).

26. Raccord haute pression selon la revendication 25, **caractérisé en ce que** lors de l'actionnement rotatif du pignon (55), la crémaillère (54) est déplacée axialement dans le sens de la flèche (69) ou en sens inverse, moyennant quoi l'extrémité (58) de la crémaillère vient en prise avec le côté frontal du corps de soupape (43) ou cesse d'être en prise avec celui-ci.

27. Raccord haute pression selon la revendication 25 ou 26, **caractérisé en ce que** lorsque l'extrémité (58) de la crémaillère (54) est en prise, le corps de soupape (43) est bloqué dans sa position de coulissement avant et ne peut plus coulisser à l'encontre de la force du ressort.

28. Raccord haute pression selon l'une des revendications 25 à 27, **caractérisé en ce que** le pignon (55) présente un joint d'étanchéité à chacune de ses deux extrémités opposées afin d'empêcher le fluide sous pression de sortir de cette zone.

29. Raccord haute pression selon la revendication 23 ou 24, **caractérisé en ce que** lorsque le dispositif de blocage de soupape (52) est désenclenché, le corps de soupape (43) peut revenir par ressort, et il n'y a pas de risque de dégradation si la palette de pièces (15) est posée avec l'élément de raccord supérieur (22) sur une surface lisse sur le banc de machine (1).

30. Raccord haute pression selon l'une des revendications 23, 24 et 29, **caractérisé en ce que** lorsque le dispositif de blocage de soupape (52) est enclenché, l'épaulement annulaire (78) du corps de soupape (43) dépasse du creux de la collerette de soupape (37) et dépasse de cette surface de telle sorte qu'en présence de chocs d'alternance de charge élevés dus à des chocs correspondants dans le courant de fluide, le corps de soupape (43) ne peut plus se soulever avec son joint d'étanchéité (44) au niveau de la surface opposée prévue dans l'élément de raccord inférieur (21), ce qui garantit un verrouillage à guidage forcé qui fonctionne sans force élastique et qui ne peut donc pas vibrer ni entraîner d'autodestructions.

31. Raccord haute pression selon l'une des revendications 1 à 30, **caractérisé en ce qu'**un bord de butée vertical (74) est formé dans l'élément de raccord supérieur (22), dans la zone de transition entre le poussoir (50) et la tige de plus grand diamètre, de telle sorte qu'on obtient un guidage absolument rectiligne de tout le corps de soupape (46, 50) dans le perçage associé (49), ce qui empêche le corps de soupape de se coincer ou de battre lorsqu'il y a des chocs d'alternance de pression dans le creux central (68).

32. Raccord haute pression selon l'une des revendications 1 à 31, **caractérisé en ce que** la vis de soupape (32) vissée dans l'élément- de raccord inférieur (21) présente un épaulement central (60) avec lequel elle, peut être centrée dans la table de machine (15).

33. Raccord haute pression selon l'une des revendications 1 à 32, **caractérisé en ce que** le raccord haute pression (20) est disposé dans la table de machine (1) en dehors du creux central (3) pour le cylindre à serrage rapide (4) et, notamment, ne présente aucune liaison de transmission de charge avec le couvercle (2) dudit cylindre (4).
